Europäisches Patentamt

European Patent Office

Office européen des brevets

(11) Publication number: **0 440 874 A2**

## (12) EUROPEAN PATENT APPLICATION

(21) Application number: 90109733.7

(22) Date of filing: 22.05.90

(51) Int. Cl.5: **B28B 1/26**

(30) Priority: 06.02.90 IT 1926990

(43) Date of publication of application:
14.08.91 Bulletin 91/33

(84) Designated Contracting States:
AT CH DE ES FR GB GR LI NL SE

(71) Applicant: GAIOTTO IMPIANTI S.p.A.
Statale Milano Crema km 27
I-26010 Vaiano Cremasco (CR)(IT)

(72) Inventor: Gaiotto, Cesare
Statale Milano Crema Km. 27
I-26010 Vaiano Cremasco (Cremona)(IT)
Inventor: Gaiotto, Alvise
Via Garibaldi 36
I-26010 Monte Cremasco (Cremona)(IT)

(74) Representative: Münzhuber, Robert,
Dipl.-Phys. et al
Patentanwalt Rumfordstrasse 10
W-8000 München 5(DE)

(54) Mold for casting ceramic products.

(57) The mold is formed of silica and a binder on the basis of a syntethic resin and comprises an inner layer (1) having a structure exhibiting a very fine porosity and acting as a filter and an outer layer (2) having a structure exhibiting a less fine porosity and acting as a support for the inner layer (1).

*FIG.3*

EP 0 440 874 A2

# MOLD FOR CASTING CERAMIC PRODUCTS

The present invention generally relates to the ceramic material field and, more particularly, to a casting mold of a new design for producing ceramic products.

As known, for the production of ceramic products, preferably, but not esclusively water closets, bidets, lavatories and the like, the ceramic material is mixed with water for obtaining the so called "slip" which can be thereafter poured in the molds. In this technical field, for the casting operation molds made of metal or gypsum are generally employed, which exhibit some water permeability and then can act as a filter and the water of the slip is drained through the mold, thereby causing the ceramic material to be thickened on the mold inner walls to form the desired product. Once the desired thickness is attained, the excess of slip is discharged from the mold and then a counterflow washing operation is performed for releasing the casting from the mold and resetting at the same time the water permeability in the mold.

In the case of metal molds, in order to have the desired water permeability and therefore to cause the molds to act as a filter porous bronze is used as a material therefor. Of course, these molds are very expensive, even if their high cost is compensated for by a rather long life.

In the case of gypsum molds, the desired water permeability is given by the microporous structure thereof and the water of the slip is adsorbed by capillarity thereby until the desired thickness of ceramic material on the mold inner walls is attained. Of course, also the gypsum mold, while being more capable of being formed and less expensive than the metal mold, has the disadvantage of being still expensive. Furthermore, it deteriorates with the passing of time so that it is to be discarded after a number of casting operations.

Also molds in plastic materials have been provided, in which the water permeability allowing them to act as a filter is obtained by providing a microporous structure therein, what requires very complex manufacturing operations. These molds must have holes for draining the water under pressure. The molds obtained by means of this plastic materials are therefore expensive because they require a particular technology for forming them and also are difficult to be washed in counterflow.

It is an object of the present invention to provide a mold for casting ceramic products, which exhibits a particularly resistant and strong microporous structure for imparting the desired water permeability thereto.

It is another object to the present invention to provide a mold for casting ceramic products which, in addition to exhibit such microporous structure, has a relatively long life.

It is still another object of the present invention to provide a mold for casting ceramic products which can be obtained with extreme facility without requiring a particular technology.

A further object of the present invention is to provide a mold for casting ceramic products which permit portion of different thickness to be obtained in the mold.

It is still a further object of the present invention to provide a mold for casting ceramic products which, in addition to exhibit all the above mentioned advantages, is also very inexpensive.

More particularly, the mold for casting ceramic products according to the present invention is characterized in that it is comprised of an aggregate having a very fine and fine granulometry and a binder on the basis of a thermosetting resin and comprises at least an inner layer having a structure exhibiting a very fine porosity and at least an outer layer having a structure exhibiting a larger porosity than that of the inner layer, said inner layer with the structure exhibiting a very fine porosity acting as a filter for thickening the slip on its outer surface and the outer layer with the structure exhibiting a larger porosity acting as a supporting layer for said inner layer and permitting an easy counterflow washing of the mold.

According to a feature of the present invention, the aggregate used for the inner layer having a structure exhibiting a very fine porosity has a granulometry ranging from 0,07 $\mu$m to 0,4 $\mu$m.

According to another feature of the present invention the aggregate for the outer supporting layer having the structure exhibiting a larger porosity has a granulometry ranging from 0,6 $\mu$m to 1,6 $\mu$m.

According to still another feature of the present invention, the aggregate comprises silica and/or quartz.

According to a further feature of the present invention, the binder on the basis of a thermosetting resin comprises an epoxy resin.

The present invention will be now described in more detail in connection to a preferred embodiment thereof, given by way of example only and therefore not intended in a limiting sense, illustrated in the accompanying drawings, wherein:

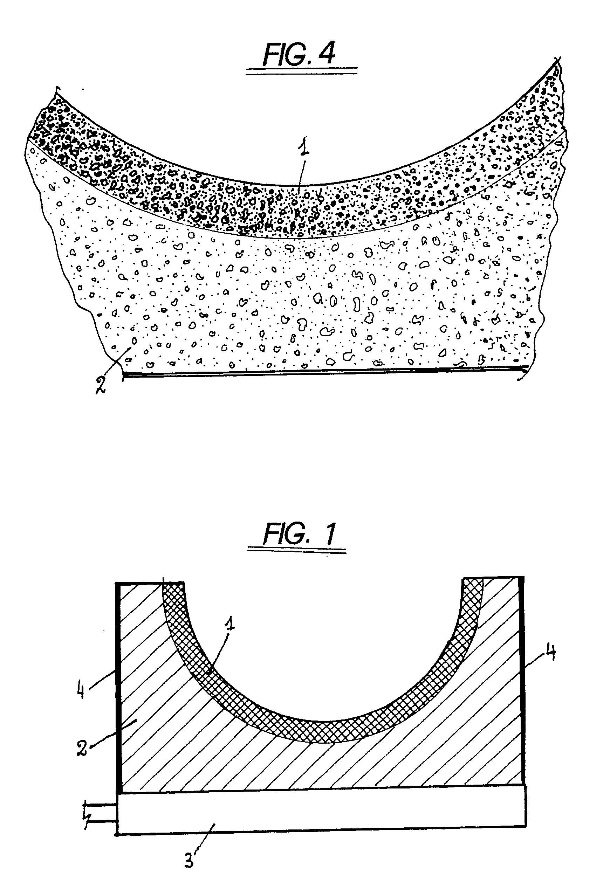

Fig. 1 diagrammatically shows in a longitudinal section a half mold for casting ceramic products according to the present invention;

Fig. 2 is a longitudinal section of the complete mold shown in the condition in which it is filled with slip;

Fig. 3 is a longitudinal section of the complete mold shown after the slip has attained the desired thickness and the exceeding slip has been drained therefrom; and

Fig. 4 is an enlarged partial view of the microporous structure of both the layers forming the mold.

As can be seen from the drawings, the mold according to the present invention comprises an inner layer 1 having a very fine porous structure and an outer layer 2 having a larger porous structure than that of the inner layer 1. The material employed for forming the mold comprises an aggregate having a fine and very fine granulometry and a binder on the basis of a thermosetting resin.

The inner layer 1 forms the microporous filtering layer proper of the mold on which the slip is to be thickened, whereas the outer layer 2 acts as a supporting material for the inner layer 1 and the microporous structure thereof has such a water permeability as to permit a good counterflow washing of all the mold both for the release of the casting and for the washing proper of the microporous structure.

INNER-LAYER

For forming the inner layer, there is employed as aggregate a silica having a granulometry ranging from 0,07 $\mu$m to 0,4 $\mu$m, preferably an average granulometry of 0,1 $\mu$m and as a binder an epoxy resin, preferably of the type obtained from an epichlorohydrin and bisphenol A, although a polyester resin can be employed with the same results.

This binder is employed in an amount of 10% to 25%, preferably 10% to 15% based on the amount of silica.

By changing the binder amount the thickness of the obtained ceramic product can be changed. This permits a ceramic product having different thicknesses in different portions thereof to be obtained.

As a matter of fact, if the ceramic product to be obtained has for example a thinner portion therein, in the corresponding portion of the mold a higher binder amount is to be employed, for example 25% based on the amount of silica. Thus, in this portion of the mold a microporous structure is obtained which is less permeable to the water, so that the water is separated from the slip in a slower manner than the remaining mold and the slip can be less thickened to form the thinner portion of the ceramic product.

On the contrary, if the ceramic product to be obtained has for example a thicker portion therein, in the corresponding portion of the mold a lower binder amount is to be employed, for example 10% based on the amount of silica. Thus, in this portion of the mold a microporous structure is obtained which is more permeable to the water, so that the water is separated from the slip in a quicker manner than the remainining mold and the slip can be more thickened to form the thicker portion of the ceramic product.

The silica having this very fine granulometry is mixed with the binder on the basis of epoxy resin and the so obtained mixture forming the inner layer of the mold is shaped in the form of the ceramic product to be obtained, for example a water closet.

OUTER LAYER

For forming the outer layer there is employed preferably as aggregate a silica having a granulometry ranging from 0,6 $\mu$m to 1,6 $\mu$m, preferably an average granulometry of 1,2 $\mu$m and as a binder and epoxy resin, preferably of the type obtained by reacting an epichlorohydrin and bisphenol A, although also a polyester resin can be employed with the same results.

This binder is employed in an amount of 15 to 30% based on the used silica, preferably in an amount of 20%.

The silica having this larger granulometry is mixed with the binder based on the epoxy resin and the so obtained mixture forming the outer layer of the mold is applied on the rear surface of the inner layer so as to act as a support therefor.

MOLD

The mold comprising the filtering inner layer 1 shaped in the form of the ceramic product to be obtained and the outer supporting layer 2 is then placed in a furnace for backing it so as to cross-link the epoxy resin and thereafter is ready to be used.

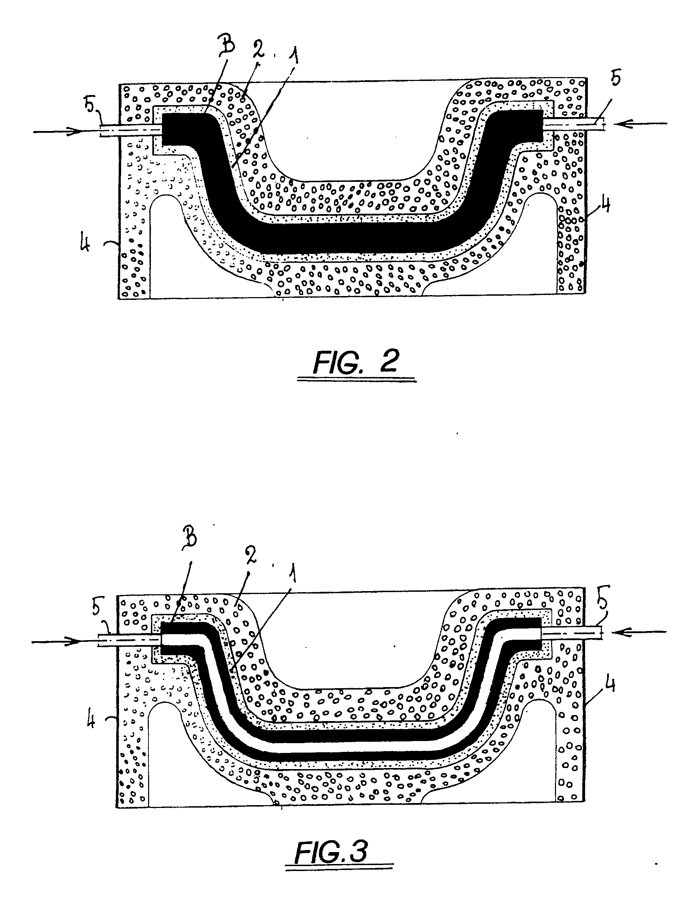

This mold is then generally made impermeable on all the sides thereof, as indicated in 4, with the exception of the rear side thereof to which a washing device 3 is applied and then the pouring of the slip B can be carried out therein through the gates 5, as shown in Fig. 2.

The mold inner layer 1 having a very fine porosity acts as a filter for the slip B during the pouring, so that the water contained in the slip can flow through the micropores both by capillarity and by the action of a pressure exerted thereon in the outer supporting layer 2 having a larger porosity than the inner layer 1. The slip B is thickened more and more on the free surface of said inner layer 1 and, once the desired thickness for the ceramic product to be obtained is attained, the exceeding slip B is drained off as shown in Fig. 3, the mold is opened and the so obtained ceramic product is released therefrom. In order to promote the release from the mold of the ceramic product, water under pressure is supplied to the washing device 3 applied on the rear side of the mold, which easily flows through the outer supporting layer 2 and then through the inner layer 1 so that the mold is washed in counterflow. This counterflow washing allows the microporosity of the layers to be reset. The mold is so ready for a new casting operation without requiring further other operations.

Of course, it is also possible to apply a vacuum on the side of the mold provided with the washing device so that this vacuum cooperates in sucking the water of the slip through the porous structures of both layers 1,2 for attaining the desired thickness of the ceramic product to be obtained.

While in the present description as aggregate only silica as been mentioned, it is evident that quartz and the like can be employed with the same results.

The mold according to the invention has the following advantages:

1) A particular technology is not required for forming it because it is sufficient to shape it in the form of the ceramic product to be obtained by means of the conventional methods and then to bake it in order to cross-link the resinous binder and therefore harden it.

2) Due to its structure the mold has a very long life and therefore it can be employed for many casting operations before being discarded.

3) Due to its strongness the mold lends it itself very well both for the low pressure casting operation and for the high pressure casting operation.

4) Its structure can be readily reinforced for making it still more strong.

5) It lends itself very well to a counterflow washing.

6) It offers the possibility of obtaining in the same mold a ceramic product having portions of different thickness.

7) It is very inexpensive over the molds till now employed.

Although the invention has been described and illustrated only in connection to a preferred embodiment thereof, it is apparent that various modifications and changes can be made thereto by a skilled in the art without departing from the scope of the invention.

## Claims

1. Mold for casting ceramic products, characterized in that it is comprised of an aggregate having a very fine and fine granulometry and a binder on the basis of a thermosetting resin and comprises at least an inner layer (1) having a structure exhibiting a very fine porosity and at least an outer layer (2) having a structure exhibiting a larger porosity than that of the inner layer (1), the inner layer (1) with the structure of very fine porosity acting as a filter for thickening the slip (B) on its outer surface and the outer layer (2) with the structure of larger porosity acting as a supporting layer for the inner layer (1) and permitting an easy counterflow washing of the mold.

2. Mold according to claim 1, characterized in that the aggregate used for the inner layer (1) with the structure exhibiting a very fine porosity has a granulometry ranging from 0,07 $\mu$m to 0,4 $\mu$m.

3. Mold according to claim 1, characterized in that the aggregate for the outer supporting layer (2) with the structure exhibiting a larger porosity than that of the inner layer (1) has a granulometry ranging from 0,6 $\mu$m to 1,6 $\mu$m.

4. Mold according to one of the preceding claims, characterized in that the aggregate comprises silica and/or quartz.

5. Mold according to claim 1, characterized in that the binder on the basis of a thermosetting resin comprises an epoxy resin, preferably obtained by reacting epichlorohydrin with bisphenol A.

6. Mold according to claim 1, characterized in that the binder on the basis of a thermosetting resin comprises a polyester resin.

7. Mold according to claim 1, characterized in that the binder is employed in an amount of 10% to 20%, based on the amount of the aggregate.

8. Mold according to claim 1, characterized in that the inner layer (1) with the structure exhibiting a very fine porosity is provided with portions having different binder amounts in order to obtain a ceramic product having portions of different thickness.

*FIG. 4*

*FIG. 1*

FIG. 2

FIG.3